# EUROPÄISCHE PATENTSCHRIFT

(11) **EP 2 176 272 B1**
(45) Veröffentlichungstag und Bekanntmachung des Hinweises auf die Patenterteilung: **29.10.2014**
(21) Anmeldenummer: 08774714.3
(22) Anmeldetag: 03.07.2008
(51) Int. Cl.: C07F 5/02, H01M 10/00

(54) **KRISTALLINES, KLARLÖSLICHES LITHIUMBIS(OXALATO)BORAT (LiBOB)**
CRYSTALLINE, COMPLETELY SOLUBLE LITHIUM BIS(OXALATO)BORATE (LiBOB)
BIS (OXALATOBORATE) DE LITHIUM (LIBOB) CRISTALLIN, TOTALEMENT SOLUBLE

(30) Priorität: 04.07.2007 DE 102007031201
(43) Veröffentlichungstag der Anmeldung: 21.04.2010
(73) Patentinhaber: Chemetall GmbH, 60487 Frankfurt (DE)
(72) Erfinder: DIETZ, Rainer, 63329 Egelsbach (DE); WIETELMANN, Ulrich, 61381 Friedrichsdorf (DE); LISCHKA, Uwe, 60437 Frankfurt (DE); BUHRMESTER, Dr. Thorsten, 64287 Darmstadt (DE); SCHADE, Klaus, 65205 Wiesbaden (DE)
(74) Vertreter: Rottmayer, Hans
(86) Internationale Anmeldenummer: PCT/EP2008/058602
(87) Internationale Veröffentlichungsnummer: WO 2009/004061

(56) Entgegenhaltungen:
- DE-C1- 19 829 030
- US-A1- 2004 034 253
- ZAVALIJ, PETER Y. ET AL: "Structural chemistry of new lithium bis(oxalato)borate solvates" ACTA CRYSTALLOGRAPHICA, SECTION B: STRUCTURAL SCIENCE , B60(6), 716-724 CODEN: ASBSDK; ISSN: 0108-7681, 2004, XP009106750
- XU W ET AL: "LIBOB AND ITS DERIVATIVES WEAKLY COORDINATING ANIONS AND THE EXCEPTIONAL CONDUCTIVITY OF THEIR NONAQUEOUS SOLUTIONS" ELECTROCHEMICAL AND SOLID-STATE LETTERS, IEEE SERVICE CENTER, PISCATAWAY, NJ, US, Bd. 4, Nr. 1, 1. Januar 2001 (2001-01-01), Seiten E01-E04, XP001101362 ISSN: 1099-0062 in der Anmeldung erwähnt

## Beschreibung

Gegenstand der vorliegenden Erfindung ist ein kristallines, klarlösliches Lithiumbis(oxalato)borat (LiBOB), ein Verfahren zu dessen Herstellung und die Verwendung des Lithiumbis(oxalato)borats.

Lithiumbatterien haben sich als Energiespeicher vor allem für Anwendungen in der portablen Elektronik ("Laptops", Mobiltelefone) wegen ihrer hohen Energie- und Leistungsdichte gegenüber anderen Batterietypen durchgesetzt. Man unterscheidet Lithiumprimärbatterien, das sind nicht wieder aufladbare Batterien mit zumeist Lithiummetallanoden, von sekundären Systemen ("Lithiumakkus"), also wieder aufladbaren Batterien.

Beide Batterietypen enthalten wasserfreie flüssige oder gelartige Ionen leitfähige Elektrolyte, in denen Leitsalze, beispielsweise LiPF₆, LiBF₄, Lithiumimide, Lithiummethide oder Lithiumboratsalze, beispielsweise Lithiumbis(oxalato)borat (LiBOB, entsprechend Li[B(C₂O₄)₂]), in gelöster Form vorliegen.

Lithiumboratsalze wie LiBOB bewirken in sekundären Lithiumbatterien im Vergleich zu Lithiumelementfluoriden wie LiPF₆ oder LiBF₄ eine signifikante Verbesserung der Zyklenstabilität und der Sicherheitseigenschaften (Cox, S.S. Zhang, U. Lee, J.L. Allen, T.R. Jow, J. Power Sources 46, 2005, 79-85). Dies geht auf eine veränderte Form der Schutzschichtbildung auf der Kohlenstoffanode einer Lithiumbatterie zurück: Boratelektrolyte bewirken die Bildung einer dünnen, sehr stabilen Li⁺-leitfähigen Schicht auf dieser Anode, die auch bei höheren Temperaturen stabil ist und deshalb gefährliche Zersetzungsreaktionen zwischen geladener Anode und beispielsweise dem Elektrolyten verhindert (J.-C.Panitz, U.Wietelmann, M.Wachtler, S.Ströbele, M.Wohlfahrt-Mehrens, J. Power Source. 153, 2006, 396-401; Broschüre der Chemetall 2005). Durch die boratsalzbedingten Verbesserungen an der Schutzschicht ergeben sich für den Anwender neue Möglichkeiten der Elektrolytformulierung. So kann beispielsweise auf das schlecht handhabbare Ethylencarbonat (1,3-Dioxolan-2-on) verzichtet und stattdessen Propylencarbonat (4-Methyl-1,3-Dioxolan-2-on) verwendet werden (K.Xu, S.Zhang, R.Jow, J. Power Sources 143, 2005, 197-202). Darüber hinaus ist es auch möglich, ganz auf 1,3-Dioxolan-2-on-Verbindungen zu verzichten und stattdessen γ-Lactone, beispielsweise γ-Butyrolacton, zu verwenden (US-A-2007/0065727).

DE-C-19829030 offenbart eine Reihe von Verfahren zur Herstellung von LiBOB:
1. Umsetzung von Lithiumborhydrid mit wasserfreier Oxalsäure: 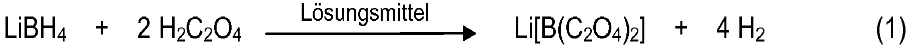 Nachteil ist neben dem hohen LiBH₄-Preis eine Nebenreaktion, bei der Oxalsäure bzw. das Oxalatanion vom Hydrid angegriffen und reduziert wird.
2. Umsetzung von Lithiumhydroxid oder Lithiumcarbonat mit Borsäure oder Boroxid und Oxalsäure in wässriger Lösung und anschließende Produkttrocknung, beispielsweise: 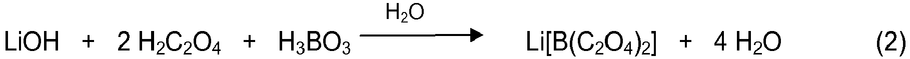 Varianten dieser Reaktionsführung bestehen darin, zwei der drei Rohstoffkomponenten im Vorfeld umzusetzen und dann erst die LiBOB-Synthese vorzunehmen, also beispielsweise:

   Li₂C0₃ ⁺ 2 H₂C₂O₄ → Li₂C₂O₄ + H₂O + CO₂ (3)

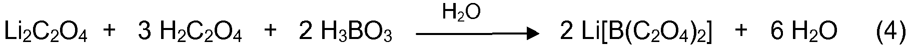

   Weitere geeignete Rohstoffe sind LiHC₂O₄ oder LiBO₂.
3. Umsetzung der in 2. genannten Rohstoffe in einem organischen Lösemittel, beispielsweise Toluol, und Entfernung des gebildeten Wassers mittels Azeotropdestillation.
4. Umsetzung von Lithiumalkoxiden und Borsäureestern mit wasserfreier Oxalsäure in einem Lösemittel, beispielsweise einem Alkohol: 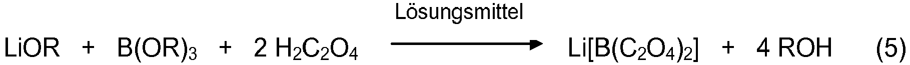 Schließlich ist aus DE-C-10108608 bekannt, die Umsetzung gemäß (2) ohne Zusatz von Wasser oder anderen Lösemittel in heterogener Phase durchzuführen.

Allen genannten Prozessen ist gemeinsam, dass das LiBOB in nicht genügend reiner Form entsteht. Es ist mit unterschiedlichen Mengen an Wasser, sauren Komponenten sowie unlöslichen Nebenprodukten, beispielsweise Lithiumoxalat (Li₂C₂O₄) oder Lithiumcarbonat (Li₂CO₃) verunreinigt. Beim Auflösen von LiBOB-Rohsalz in aprotischen Lösemitteln wie Estern oder Nitrilen entstehen deshalb stark trübe Lösungen. Der unlösliche Anteil beträgt typisch zwischen 0,5 und 2 Gew.-%, die homogenisierten Lösungen weisen Trübungen von größer 100 NTU (NTU = nephalometric turbidity unit), typisch 200 bis 1000 NTU auf.

Aus diesem Grund muss das LiBOB-Rohsalz einem Reinigungsprozess unterworfen werden. Dieser besteht nach Stand der Technik aus einer Umkristallisation aus Acetonitril (AN). Dazu wird zunächst eine gesättigte, klare LiBOB-Lösung in Acetonitril hergestellt und dann Toluol zugesetzt. Das Toluol verdrängt LiBOB aus der Lösung und es bildet sich ein nadelförmiges Kristallisat, bestehend aus einem LiBOB•AN-Komplex mit AN als Solvat. Dieser Komplex wird anschließend vakuumgetrocknet, beispielsweise bei 80 °C über mehrere Tage (W. Xu, C.A. Angell, Electrochem. Solid-State Lett. 4 (2001), E1-E4). Bei dieser Trocknungsprozedur wird das gebundene AN entfernt, wobei die Kristallform zerstört wird. Das so gebildete weitgehend solvatfreie LiBOB wird in staubfeiner, extrem schlecht handhabbarer Form erhalten. In ähnlicher Weise kristallisiert LiBOB auch aus vielen anderen Lösemitteln, beispielsweise Tetrahydrofuran (THF) oder Ethylacetat, in solvatisierter Form aus. Da alle genannten Lösemittel in Batterien ungebräuchlich oder unerwünscht sind, müssen sie vor Verwendung vollständig entfernt werden. Dabei entstehen wie im Falle von AN feine, hygroskopische Pulver, die sich nur sehr schlecht handhaben lassen.

Außerdem ist es schwierig, letzte Lösemittelreste vollständig zu entfernen. Von Ethylacetat ist bekannt, dass es selbst in relativ kleinen Konzentrationen die Hochtemperaturstabilität von Lithiumionenbatterien stören kann (T.R. Jow, K. Xu, M.S. Ding, S.S. Zhang, J.L. Allen, K. Amine, J. Electrochem. Soc. 151, A1702-A1706 (2004)).

Aufgabe der vorliegenden Erfindung ist es, die Nachteile des Standes der Technik zu überwinden.

Insbesondere Aufgabe der vorliegenden Erfindung ist es, ein von batteriefremden Lösemitteln freies, insbesondere ein von Acetonitril freies, klarlösliches und gleichzeitig staubarmes LiBOB-Kristallisat zur Verfügung zu stellen. Klarlöslich im Sinne der Erfindung bedeutet dabei, dass die Trübung einer ca. 15 %igen Lösung von LiBOB in Acetonitril maximal 100 NTU, bevorzugt maximal 50 NTU beträgt. Staubarm im Sinne der Erfindung bedeutet dabei, dass der Staubanteil kleiner als 10 Gew.-% ist. Als Staub im Sinne der Erfindung werden Teilchen bezeichnet, deren größter Durchmesser kleiner als 10 µm ist.

Erfindungsgemäß wird die Aufgabe überraschenderweise durch ein LiBOB mit den Merkmalen des Hauptanspruchs gelöst. Vorzugsweise Ausgestaltungen finden sich in den Unteransprüchen.

Die erfindungsgemäße Lösung der Aufgabe besteht überraschenderweise darin, ein grobkristallines, im Wesentlichen quaderförmiges LiBOB, bei dem der Median des größten Durchmessers der Primärkristallite 50 µm bis 5 mm, bevorzugt 200 µm bis 2 mm, besonders bevorzugt 500 µm bis 1 mm beträgt, bereitzustellen. Bevorzugt liegt weniger als 20 Gew.-% des LiBOB unterhalb der halben Länge dieses Medians vor. Das durchschnittliche Volumen der Primärkristallite beträgt zwischen 0,01 bis 100 mm³, bevorzugt zwischen 0,1 bis 50 mm³.

Der Staubanteil liegt erfindungsgemäß unter 10 Gew.-%, bevorzugt unter 5 Gew.-%, besonders bevorzugt unter 2 Gew.-%..

Das erfindungsgemäß hergestellte LiBOB löst sich in aprotischen Lösemitteln, beispielsweise Carbonatlösemitteln, Estern oder Acetonitril weitgehend rückstandsfrei auf. Der unlösliche Rückstand beträgt maximal 0,1 Gew.-%, bevorzugt maximal 0,01 Gew.-%. Die Lösungen sind klar oder allenfalls schwach trübe; die Trübung einer 15 %igen Lösung des erfindungsgemäßen LiBOB in Acetonitril beträgt maximal 100 NTU, bevorzugt maximal 50 NTU.

Erfindungsgemäß ist das LiBOB durch ein Verfahren erhältlich, bei dem zur Reinigung, insbesondere zur Umkristallisation des LiBOB-Rohsalzes ein Lösemittel verwendet wird, das als wesentlichen Bestandteil einen zyklischen 5-Ring-Ester enthält oder aus diesem besteht. Der erfindungsgemäße zyklische 5-Ring-Ester ist dabei ausgewählt aus einer 1,3-Dioxolan-2-on-Verbindung oder mehreren 1,3-Dioxolan-2-on-Verbindungen oder einem γ-Lacton oder mehreren γ-Lactonen oder Mischungen aus mindestens zwei der genannten Verbindungen.

Das erfindungsgemäße LiBOB wird als LiBOB•( n 5-Ring-Ester)-Komplex mit dem erfindungsgemäß ausgewählten 5-Ring-Ester als Solvat erhalten, wobei n die Molzahl des 5-Ring-Esters gegenüber dem LiBOB angibt (Molzahl LiBOB = 1). Die Molzahl n kann abhängig von der Verfahrensführung Werte von 0,001 bis 10, bevorzugt von 0,01 bis 5, besonders bevorzugt von 0,1 bis 3, ganz besonders bevorzugt von 0,2 bis 2 Äquivalente annehmen. In einer besonderen erfindungsgemäßen Ausführung beträgt n = 0, d.h. das LiBOB liegt solvatfrei vor.

Erfindungsgemäß bevorzugt ist ein LiBOB mit einem Restlösemittelanteil von kleiner als 50 Gew.%.

Vorzugsweise ist die 1,3-Dioxolan-2-on-Verbindung ausgewählt aus Ethylencarbonat (EC, 1,3-Dioxolan-2-on), Propylencarbonat (PC, 4-Methyl-1,3-Dioxolan-2-on) oder Butylencarbonat (BC, 4-Ethyl-1,3-Dioxolan-2-on). Das γ-Lacton ist vorzugsweise ausgewählt aus γ-Butyrolacton oder γ-Valerolacton.

Soweit das erfindungsgemäße LiBOB überhaupt Solvat enthält, besteht dieses Solvat ausschließlich aus einem erfindungsgemäß ausgewählten 5-Ring-Ester als solchen. Erfindungsgemäß enthält das LiBOB kein anderes Solvat als den erfindungsgemäß ausgewählten 5-Ring-Ester, insbesondere ist es Acetonitril-frei (AN-frei).

Das erfindungsgemäß ausgewählte Lösemittel kann zusätzlich ein weiteres oder mehrere weitere aprotische Lösemittel enthalten, die keine Solvate mit LiBOB bilden, beispielsweise ausgewählt aus Kohlenwasserstoffen, Ethern, Estern oder azyklischen Carbonaten,.

Erfindungsgemäß bevorzugt besteht das erfindungsgemäß ausgewählte Lösemittel aus einer 1,3-Dioxolan-2-on-Verbindung oder einem γ-Lacton in handelsüblicher Reinheit mit einem Wassergehalt von kleiner als 0,5 Gew.-%.

Das erfindungsgemäße Verfahren kann in mehreren Varianten ausgeführt werden. Zunächst wird eine LiBOB-Lösung im erfindungsgemäß ausgewählten Lösemittel hergestellt. Dazu wird das in an sich bekannter Weise hergestellte LiBOB-Rohsalz unter Ausschluss von Luft und Feuchtigkeit in das erfindungsgemäß ausgewählte Lösemittel in einer Menge eingetragen, die maximal der Sättigungskonzentration entspricht. Soll das LiBOB anschließend aus der Lösung kristallisiert werden, ist es erfindungsgemäß bevorzugt, eine fast gesättigte Lösung (d.h. die LiBOB-Lösung weist mindestens 90 % der maximalen LiBOB-Konzentration auf) herzustellen. Im Falle von EC und PC sind dies etwa 16 bis 20 Gew.-% LiBOB. Der Auflöseprozess kann durch geeignete Homogenisierungsmaßnahmen gemäß dem Stand der Technik, beispielsweise Rühren oder Schütteln, und ggf. Erwärmen, beispielsweise auf Temperaturen von 30 bis 100 °C, unterstützt werden.

Alternativ kann auch eine geringer konzentrierte Lösung von LiBOB-Rohsalz im erfindungsgemäß ausgewählten Lösemittel, beispielsweise mit einer Konzentration von 5 bis 15 Gew.-% angesetzt werden. Dies ist bevorzugt, wenn eine weitgehend wasserfreie LiBOB-Lösung erhalten werden soll, bei der der Wassergehalt kleiner als 500 ppm, bevorzugt kleiner als 200 ppm sein soll.

Auch die mit dem erfindungsgemäß ausgewählten Lösemittel hergestellte LiBOB-Rohlösung ist im Allgemeinen trübe. Ursache hierfür ist die Verwendung von, nach dem Stand der Technik hergestelltem, LiBOB-Rohsalz. Da diese Trübung für Anwendungen in Lithiumbatterien nicht akzeptabel sind, muss die Lösung nach dem Stand der Technik von unlöslichen Bestandteilen befreit, beispielsweise filtriert, dekantiert und/oder zentrifugiert werden. Bevorzugt ist die Membranfiltration, wobei besonders bevorzugt lösemittelbeständige Membranen mit Poren von kleiner oder gleich 0,5 µm, bevorzugt von kleiner oder gleich 0,2 µm zum Einsatz kommen.

Die nach der Fest-Flüssig-Trennung erhaltene, völlig klare und gegebenenfalls durch einen oder mehrere weitere Vorbehandlungsschritte entsäuerte und/oder getrocknete Lösung von LiBOB im erfindungsgemäß ausgewählten Lösemittel kann erfindungsgemäß nach drei Verfahrensvarianten zu einem staubfreien Kristallisat aufgearbeitet werden; erfindungsgemäß bevorzugt wird dazu eine fast gesättigte LiBOB-Lösung eingesetzt:
A) Eindampfkristallisation: die LiBOB-Lösung wird bei vermindertem Druck (bevorzugt 0,01 bis 100 mbar) und Sumpftemperaturen von maximal 200 °C eingedampft, wobei sich beim Überschreiten der Sättigungskonzentration überraschend solvatfreies LiBOB in kristalliner Form ausscheidet. Um die Bildung fester LiBOB-Solvatkomplexe zu vermeiden, muss die Temperatur während der Kristallisation über der Solvat-Dissoziationstemperatur liegen. Bei Sumpftemperaturen ≥ 80 °C kristallisierte überraschenderweise ausschließlich solvatfreies LiBOB.
B) Verdrängungskristallisation: der LiBOB-Lösung wird ein LiBOB nicht lösendes organisches Lösemittel oder Lösemittelgemisch solange zugegeben und die Mischung homogenisiert, beispielsweise gerührt oder geschüttelt, bis sich LiBOB als Komplex abscheidet, beispielsweise mit 0,01 bis 5, bevorzugt 0,1 bis 3, besonders bevorzugt mit 0,2 bis 2 Äquivalenten des im erfindungsgemäßen Lösemittel enthaltenen 5-Ring-Esters als Solvat. Als organisches Verdrängungslösemittel werden bevorzugt aromatische Kohlenwasserstoffe wie Toluol, Ethylbenzol oder Xylol oder gesättigte Kohlenwasserstoffe wie beispielsweise Pentan, Hexan, Heptan, Cyclohexan oder Methylcyclohexan oder voll- oder teilfluorierte Kohlenwasserstoffe oder Ether wie Diethylether, Di-n-propylether, Dibutylether, Diisopropylether, Methyl-tert-amylether oder Methyltertbutylether oder Mischungen aus diesen Lösemitteln eingesetzt. Es werden 30 bis 300 Vol.-% des Verdrängungslösemittels, bezogen auf das Volumen der vorgelegten LiBOB-Lösung, zugegeben. Die Zugabe erfolgt bei 0 bis 100 °C, bevorzugt bei 0 bis 60 °C. In einer ganz besonders bevorzugten Ausführungsform wird das Verdrängungslösemittel in mehreren Portionen zugegeben. Nach jeder Zugabe wird die Gleichgewichtseinstellung zwischen den zwei sich bildenden Flüssigkeitsphasen abgewartet und die obere, LiBOB-arme Phase entfernt, beispielsweise dekantativ. Auf diese Weise kann eine fast vollständige Verdrängung von LiBOB aus der Lösungsphase erzielt werden. Dabei werden besonders hohe Ausbeuten an LiBOB•( n 5-Ring-Ester)-Komplex als Kristallisat erzielt.
C) Kühlkristallisation: die LiBOB-Lösung wird bei tieferer Temperatur, beispielsweise 0 °C gelagert. Beim anfallenden Kristallisat handelt es sich um LiBOB•5-Ring-Ester-Komplexe, die von der Mutterlauge, beispielsweise durch Filtration abgetrennt werden können. Es ist bevorzugt, bei 40 bis 150 °C gesättigte LiBOB-Lösungen herzustellen und diese auf eine Temperatur von -20 °C bis +20 °C abzukühlen. Zur Vervollständigung der Kristallisation wird die Lösung mindestens 10 Minuten, bevorzugt mindestens 2 Stunden, besonders bevorzugt 2 bis 10 Stunden bei der tieferen Temperatur gelagert, bevor der LiBOB•( n 5-Ring-Ester)-Komplex als Kristallisat isoliert wird.

Erfindungsgemäß ist es auch möglich, die einzelnen Kristallisationstechniken zu kombinieren; beispielsweise kann das Verdrängungssolvenz bei höheren Temperaturen, beispielsweise 50 °C zugegeben werden und nach Vermischung auf beispielsweise 0 °C abgekühlt werden. Eine Variante der Verdrängungskristallisation B) besteht darin, die LiBOB-Lösung vorzulegen und das Verdrängungslösemittel ohne Homogenisierung zuzugeben, d.h. die LiBOB-Lösung mit dem spezifisch leichteren Lösemittel zu überschichten. Da die Vermischung nur durch Diffusion und damit nur sehr langsam erfolgt, bilden sich entsprechend große, störstellenarme LiBOB•( n 5-Ring-Ester)-Komplexe als Kristalle, die eine entsprechend besonders hohe Reinheit aufweisen.

Erfindungsgemäß bevorzugt ist die Eindampfkristallisation. Diese Technik verzichtet auf ein Zweitlösemittel, was den Prozess besonders wirtschaftlich macht. Von besonderem Vorteil ist aber, dass auf diese Art überraschenderweise ein fast lösemittel- und solvatfreies LiBOB resultiert: Die Restlösemittelgehalte liegen unter 2 Gew.-%. Nur mit einer solchen Lieferform hat der Endanwender die volle Freiheit bei der Flüssigelektrolytformulierung. Da es sich bei dem erfindungsgemäß ausgewählten Lösemittel um einen für Batterieanwendungen gebräuchlichen Stoff handelt, eine 1,3-Dioxolan-2-on-Verbindung oder ein γ-Lacton, stellen die verbleibenden Lösemittel-Restgehalte keinerlei Problem dar.

Für den Fachmann ist insbesondere die Tatsache, dass per Eindampfkristallisation solvatfreies LiBOB hergestellt werden kann, überraschend. Die erfindungsgemäß ausgewählten 5-Ring-Ester sind nämlich sehr starke Lewis-Basen, die mit LiBOB einen entsprechend festen Komplex bilden sollten, wie das von Acetonitril, THF, Ethylacetat und anderen Lösemitteln bekannt ist. Nachfolgend werden die Dipol-Momente verschiedener Lösemittel verglichen. Diese physikalischen Konstanten korrelieren mit den Lewis-Basizitäten:

**Tabelle 1: Dipol-Momente verschiedener Lösemittel**

| | µ (D)* |
|---|---|
| Ethylacetat | 1,8 |
| THF | 1,75 |
| Acetonitril | 3,924 |
| Ethylencarbonat | 4,9 |
| Propylencarbonat | 4,9 |
| γ-Butyrolacton | 4,27 |

| | |
|---|---|
| * D.R. Lide, "Organic Solvents", CRC Press Boca Raton, 1995. | |

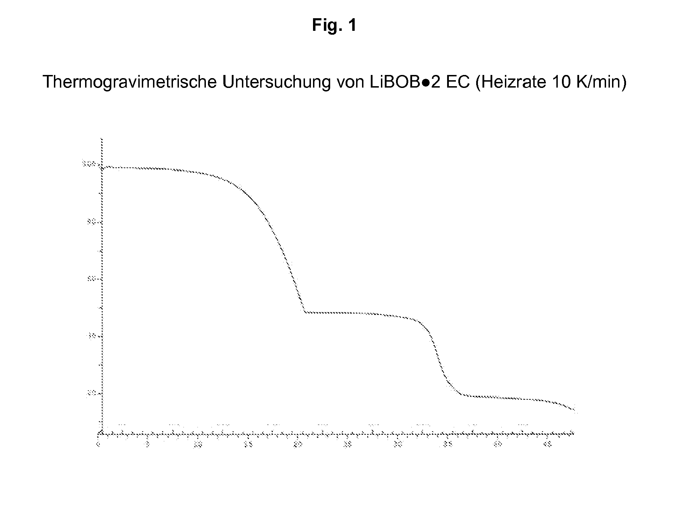

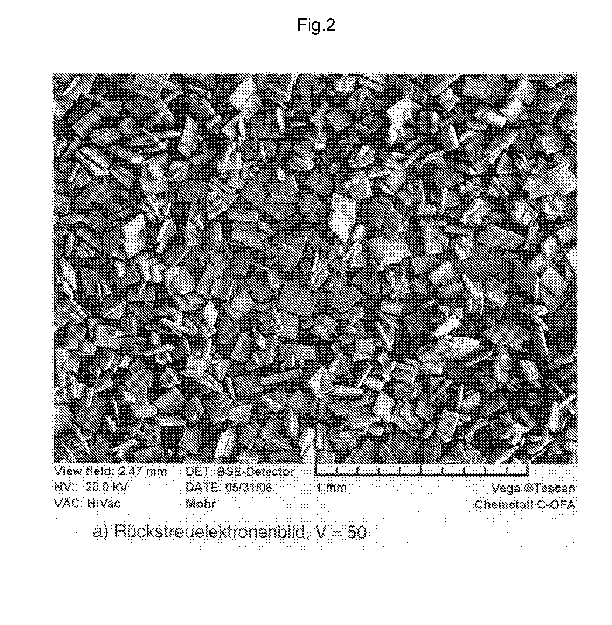

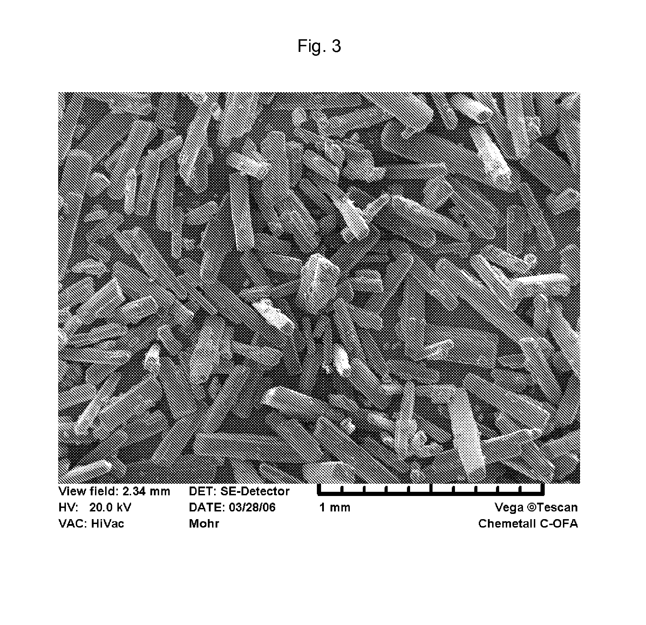

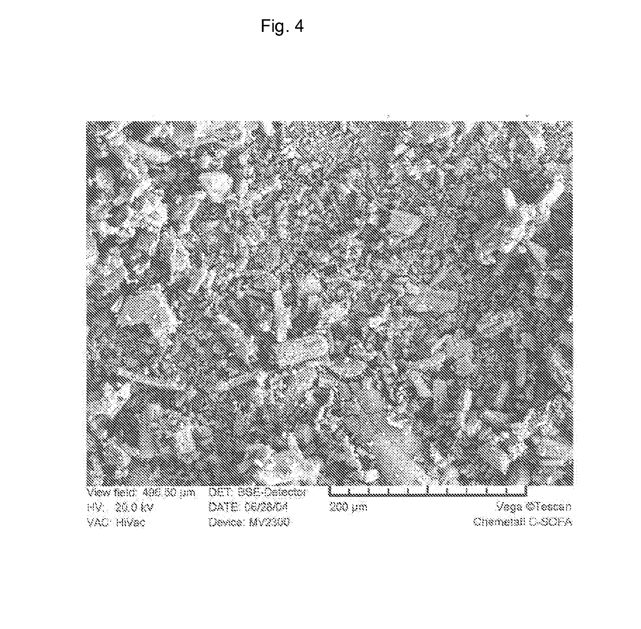

Die bei der Verdrängungs- oder Kühlkristallisation gebildeten LiBOB•( n 5-Ring-Ester)-Komplexe erweisen sich tatsächlich als stabil. Fig. 1 zeigt dies anhand einer Thermogravimetrie am Beispiel des LiBOB• 2 EC-Komplexes bei einer Heizrate von 10 K/min):
Ordinate: Temperatur [°C],
Abszisse: Zeit [Minuten].

Aber auch LiBOB-Kristallisate mit höheren Gehalten an erfindungsgemäß ausgewählten 5-Ring-Estern stellen eine erfindungsgemäße Ausführungsform dar. Der erfindungsgemäße 5-Ring-Ester ist dabei durch elektrostatische Wechselwirkungen an das LiBOB gebunden, d.h. es liegen feste Solvatkomplexe vor. Die genaue Zusammensetzung der Solvatkomplexe, d.h. das Molverhältnis von LiBOB zum 5-Ring-Ester kann stark schwanken und ergibt sich aus den jeweiligen Druck-/Temperaturbedingungen bei der Kristallisation und den Stoffeigenschaften des jeweils verwendeten 5-Ring-Esters.

Da gängige, d.h. kommerziell eingesetzte, Elektrolyte für Lithiumionenbatterien mindestens ein Lösemittel auf der Grundlage einer 1,3-Dioxolan-2-on-Verbindung, zumeist Ethylencarbonat, oder eines γ-Lactons enthalten, können die genannten Solvatkomplexe zumeist ohne Nachteile direkt für Batterieelektrolyte Verwendung finden.

Das nach dem erfindungsgemäßen Verfahren hergestellte LiBOB fällt in grobkristalliner und staubfreier Form an. Dies gilt sowohl für das solvatfreie LiBOB als auch für die LiBOB•5-Ring-Ester-Komplexe. Überraschend gegenüber nach dem Stand der Technik hergestellten LiBOB•Solvat-Komplexen sind sie so stabil, dass sie in eine trockene, fließfähige Form gebracht werden können, ohne dass sie beim Trocknen bei milden Temperaturen, beispielsweise bei 20 bis 60 °C, den erfindungsgemäß ausgewählten 5-Ring-Ester verlieren. D.h. die nach dem erfindungsgemäßen Verfahren hergestellten LiBOB•( n 5-Ring-Ester)-Komplexe zerfallen dabei nicht zu einem Pulver, wie das bei den nach dem Stand der Technik hergestellten LiBOB•Solvat-Komplexen der Fall ist.

In einer besonders bevorzugten Ausgestaltungsform des erfindungsgemäßen Verfahrens wird die im ersten Schritt hergestellte noch trübe Lösung des LiBOB-Rohsalzes im erfindungsgemäß ausgewählten Lösemittel durch Behandlung mit im erfindungsgemäß ausgewählten Lösemittel unlöslichen basischen Verbindungen oder ebenfalls im erfindungsgemäß ausgewählten Lösemittel unlöslichen Wasser entziehenden Feststoffen vorbehandelt. Als basische Verbindungen können Alkalimetallhydride, bevorzugt Natriumhydrid und/oder Lithiumhydrid, Metalloxide, bevorzugt Calciumoxid, Lithiumoxalat, Lithiumhydrogenoxalat, Lithiummetaborat, Lithiumtetraborat, Lithiumcarbonat oder wasserfreies Lithiumhydroxid oder Mischungen aus den genannten Stoffen eingesetzt werden. Als Wasser entziehende Feststoffe dienen Molsiebe und/oder Aluminiumoxide.

Diese Vorbehandlung erfolgt unter Ausschluss von Luft und Feuchtigkeit in geschlossenen Apparaturen. Die genannten Stoffe sind allein oder in Kombination in der Lage, den Wasser- und Säuregehalt der Lösung des LiBOB-Rohsalzes zu reduzieren. Sie werden im allgemeinen in Mengen von 0,01 bis 10 Gew.-% der LiBOB-Lösung zugemischt. Es ist bevorzugt, die entstehende Suspension zu homogenisieren, also beispielsweise zu rühren und/oder zu schütteln. In vielen Fällen empfiehlt es sich auch, diesen Vorgang bei erhöhten Temperaturen, im allgemeinen zwischen 30 und 200 °C, vorzunehmen. In Abhängigkeit vom Vorbehandlungsmittel, dessen Konzentration und der Temperatur betragen die Einwirkzeiten zwischen 10 Minuten und einer Woche, bevorzugt zwischen einer Stunde und 20 Stunden. Die gereinigte Suspension wird danach durch Fest-Flüssig-Trennung, wie oben beschrieben, geklärt.

Eine weitere Möglichkeit, die Lösung des LiBOB-Rohsalzes im erfindungsgemäßen Lösemittel zu trocknen, besteht darin, das Wasser auf dem Wege einer teilweisen Lösemittelentfernung abzudestillieren. Dazu wird die LiBOB-Lösung vorzugsweise im Vakuum erhitzt und ein Teil des Lösemittels abdestilliert. Es wurde überraschend gefunden, dass bei diesem Verfahren das enthaltene Wasser zumindest teilweise mit verdampft werden kann. Bei dieser Variante wird bevorzugt eine verdünnte Lösung von LiBOB-Rohsalz im erfindungsgemäß ausgewählten Lösemittel, beispielsweise mit einer Konzentration von 5 bis 15 Gew.-% eingesetzt. Auf diese Art und Weise kann vermieden werden, dass LiBOB oder ein LiBOB-Solvatkomplex auskristallisiert. Bevorzugt enthält das erfindungsgemäße Lösemittel keine Lösemittelkomponenten, die bei Normaldruck unterhalb von ca. 200 °C sieden. Besonders bevorzugt besteht das erfindungsgemäß ausgewählte Lösemittel ausschließlich aus einem erfindungsgemäß ausgewählten 5-Ring-Ester.Geht man von einer LiBOB-Lösung aus, die 500 bis 5000 ppm Wasser enthält, so lassen sich durch das erfindungsgemäße Trocknungsverfahren im allgemeinen Restwassergehalte von unter 200 ppm, bevorzugt von unter 100 ppm erzielen.

Um zu vermeiden, dass sich LiBOB bei der Destillation zersetzt, sollte die Destillationstemperatur 200 °C nicht überschreiten. Bevorzugt erfolgt die Destillation im Temperaturbereich zwischen 80 und 170 °C. Dieser mit einer Aufkonzentration des LiBOB verbundene Destillationsprozess wird bevorzugt unter vermindertem Druck, besonders bevorzugt unterhalb von ca. 50 mbar durchgeführt.

Die erfindungsgemäß hergestellten gereinigten LiBOB-Feststoffe oder Lösungen von LiBOB in aprotischen Lösemitteln werden als Elektrolyte oder Elektrolytbestandteile in galvanischen Elementen, beispielsweise Lithiumionenbatterien, eingesetzt.

Die nachfolgenden Beispiele sollen die Erfindung näher erläutern, ohne sie einzuschränken. Für alle Versuche wird eine membranfiltrierte (Fluorpolymer, DSS/Alfa Laval, Porenweite 0,15 µm) LiBOB-Lösung eingesetzt, wobei das LiBOB gemäß DE-C-19839030 hergestellt wurde.

### Beispiel 1: Herstellung von solvatfreiem LiBOB-Kristallisat (Eindampfkristallisation, Kristallisatabtrennung bei ca. 100 °C)

5064 g einer 17 %igen Lösung von LiBOB in Propylencarbonat (PC) mit einem Wassergehalt von 230 ppm wurden bei ca. 8 bis 10 mbar und ca. 120 °C eingedampft. Nach Abdestillieren von ca. 0,8 kg PC wurde das Vakuum kurz gebrochen und 1 g erfindungsgemäßes LiBOB-Kristallisat zugegeben. Im Laufe der weiteren Vakuumdestillation trübte sich die LiBOB-Lösung ein. Es wurden insgesamt 2,34 kg PC abdestilliert.

Das Vakuum wurde gebrochen und die entstandene Suspension unter Rühren auf 110 °C abgekühlt. Dann wurde die Suspension auf eine heizbare Glasfilterfritte abgelassen und filtriert. Die Filtrationszeit betrug etwa 3 Minuten; das Kristallisat wurde dreimal mit je 100 ml vorgewärmtem Toluol gewaschen und bei einer Temperatur von 80 bis 90 °C vakuumgetrocknet.

| | |
|---|---|
| Ausbeute: | 382 g Kristallisat, grob |
| Li⁺ (ICP): | 5,15 mmol/g (≙ 99,8 % d. Th.) |
| Wassergehalt: | nicht nachweisbar (¹H-NMR-Methode) |
| Stabilität: | Zersetzungsbeginn > 300 °C (Thermogravimetrie) |
| Reinheit: | keine nachweisbaren Verunreinigungen im ¹¹B-NMR-Spektrum (Lösung in CD₃CN) |
| REM: | quaderförmige Kristallite mit größten Kantenlängen von ca. 0,2 mm (s. Fig. 2) |

Das Kristallisat löst sich völlig rückstandsfrei in Acetonitril (klare Lösung). Der PC-Restgehalt beträgt unter 0,2 Gew.-%. Der Staubanteil liegt unter 1%.

### Beispiel 2: Herstellung eines LiBOB•0,2 PC-Solvates (Eindampfkristallisation, Kristallisatabtrennung bei Raumtemperatur)

639 g einer 16,1 %igen Lösung von LiBOB in Propylencarbonat (PC) wurden in einen trockenen, mit Argon gefüllten 1-I-Schlenkkolben gefüllt und am Rotationsverdampfer bei ca. 30 mbar und einer Ölbadtemperatur von 150 bis 160 °C destillativ aufkonzentriert. Nach Abdestillation von 170 g PC begann sich ein grobes Kristallisat abzuscheiden. Es wurden insgesamt 236 g PC abdestilliert; dann wurde auf Raumtemperatur abgekühlt und der Ansatz einen Tag bei dieser Temperatur gelagert. Das Kristallisat wurde durch Filtration durch eine Umkehrfritte aus Glas isoliert. Nach Waschung mit 2 Portionen Methyl-tert-butylether wurde das Kristallisat bei Raumtemperatur vier Stunden vakuumgetrocknet.

| | |
|---|---|
| Ausbeute: | 20 g; |
| Li⁺ (ICP): | 4,80 mmol/g ( ≙ 93 % LiBOB, Rest PC); |
| Wassergehalt: | 250 ppm; |
| Thermogravimetrie: | 9,2 % Massenverlust bis 300 °C ( ≙ LiBOB•0,19 PC); |
| Reinheit: | keine nachweisbaren Verunreinigungen im ¹¹B-NMR-Spektrum (Lösung in CD₃CN); |
| REM: | quaderförmige Kristallite mit größten Kantenlängen von ca. 0,5 mm (s. Fig. 3). |

Das staubfreie Produkt (Staubanteil kleiner als 1 %) erwies sich als klarlöslich in Acetonitril.

### Beispiel 3: Herstellung eines LiBOB•0,4 PC-Solvates (Verdrängungskristallisation)

300 g einer klaren, 17,0 %igen Lösung von LiBOB in Propylencarbonat wurden unter Rühren mit 560 g Toluol überschichtet. Gegen Ende der Toluolzugabe begann ein farbloser Feststoff in der unteren flüssigen Phase auszukristallisieren. Der Rührer wurde abgestellt und die obere toluolreiche Phase abdekantiert (550 g mit einem Li⁺-Gehalt von 0,057 mmol/g). Dann wurde der Rührer wieder eingeschaltet und 340 g Frischtoluol zugegeben. Dabei bildete sich viel mehr Kristallisat und die schwerere Flüssigphase verschwand.

Es wurde auf 0 °C abgekühlt und 2 Stunden bei dieser Temperatur gehalten. Dann wurde die kalte Mischung filtriert. Das Kristallisat wurde mit zweimal mit je 50 ml Toluol gewaschen und dann 5 Stunden bei Raumtemperatur vakuumgetrocknet.

Es wurden 40,2 g eines farblosen Kristallisats mit einem Lithium- und Borgehalt von 4,2 mmol/g erhalten. Dieser Wert entspricht einem LiBOB-Gehalt von 81 %, also einem LiBOB•0,43 PC-Komplex.

| | |
|---|---|
| Ausbeute: | 64 % d. Th. |

Das LiBOB-Solvat löste sich klar und rückstandfrei in Acetonitril und hatte einen Staubanteil von weniger als 1 Gew.-%.

### Beispiel 4: Vorbehandlung einer LiBOB/PC-Rohlösung mit Aluminiumoxid (Vortrocknung)

11,2 kg einer 17,0 %igen Lösung von LiBOB in PC mit einem Wassergehalt von 470 ppm (Karl Fischer Titration) wurden mit 538 g Aluminiumoxid (Alu-N von ICN Biomedicals) 5 Stunden gerührt. Nach dieser Zeit wurde eine Probe entnommenen, klar filtriert und auf Wassergehalt geprüft, der 130 ppm betrug. Es wurden nochmals 780 g Aluminiumoxid zugegeben und 2 Stunden gerührt; der Wassergehalt betrug anschließend 30 ppm.

Die getrocknete Lösung wurde von den Feststoffen abdekantiert und anschließend membranfiltriert (Fluorpolymermembran FSM 0,15 PP von Alfa Laval). Im klaren, farblosen Filtrat (10,1 kg) wurde ein Wasserwert von 35 ppm titriert.

### Beispiel 5: Vorbehandlung einer LiBOB/PC-Lösung mit Lithiumhydrid

210 g einer klaren 16 %igen Lösung von LiBOB in PC mit einem Säuregehalt von 0,3 µmol H⁺/g wurden mit 1,73 g LiH-Pulver versetzt und unter Luftabschluss 4 Tage gerührt. Nach dieser Zeit wurde eine Probe entnommen, über ein Spritzenfilter (0,2 µm, PTFE-Membran) klarfiltriert und erneut einer Säuremessung unterzogen. In dieser Probe konnte keinerlei Säure mehr nachgewiesen werden (≤ 0,01 µmol H⁺/g).

### Titrationsmethode: Tributylamin in PC gegen Bromphenolblau als Indikator

### Vergleichsbeispiel 1: Umkristallisation von LiBOB aus Acetonitril (Verdrängungskristallisation)

324 g einer klaren, 20 %igen Lösung von LiBOB in Acetonitril (AN) wurden in einen trockenen, mit Argon befüllten 500-ml-Doppelmantelreaktor gefüllt. Unter Rühren wurde auf 0 °C gekühlt und dann 340 g Toluol innerhalb von ca. 20 Minuten zugetropft. Das Toluol mischte sich zunächst homogen mit der LiBOB/AN-Lösung. Bereits nach Zugabe von ca. 50 ml Toluol wurde beginnende Kristallisation beobachtet.

Es wurde ca. eine Stunde bei 0 °C langsam gerührt und die Suspension dann auf eine Glasfritte abgelassen.

Das grobe Kristallisat wurde zunächst mit 90 ml Toluol, dann zweimal mit je 50 ml Pentan gewaschen. Dann wurde es zwei Stunden bei Raumtemperatur vakuumgetrocknet.

Ausbeute: 63,0 g grobes Kristallisat mit einem Acetonitrilgehalt von 28 Gew.-%.

Das LiBOB•1,8 AN-Solvat wurde 24 Stunden im Vakuumtrockenschrank bei 90 °C nachgetrocknet.

| | | |
|---|---|---|
| Ausbeute: | 43,4 g (67 % d. Th.) Kristallisat mit einem Staubanteil von ca. 40 % (s. Fig.4); | |
| Analyse (ICP): | Li⁺: | 5,10 mmol/g; |
| | B: | 5,15 mmol/g. |

Die Analysenwerte entsprechen einem LiBOB-Gehalt von 99,4 %.

## Patentansprüche

1. LiBOB, welches ein von batteriefremden Lösemitteln freies, grobkristallines, wobei darunter ein im Wesentlichen quaderförmiges LiBOB verstanden wird, bei dem der Median des größten Durchmessers der Primärkristallite 50 µm bis 5 mm beträgt, welches ein staubarmes LiBOB-Kristallisat bildet, dessen Staubanteil kleiner als 10 Gew.-% ist und als Staub Teilchen bezeichnet werden, deren größter Durchmesser kleiner als 10 µm ist und welches klarlöslich ist, wobei die Trübung einer 15 %igen Lösung von LiBOB in Acetonitril maximal 100 NTU beträgt und als LiBOB•( n 5-Ring-Ester)-Komplex vorliegt, wobei n die Werte von 0,001 bis 2 Äquivalente annehmen kann oder solvatfrei vorliegt.

2. LiBOB nach Anspruch 1, **dadurch gekennzeichnet, dass** der 5-Ring-Ester ausgewählt ist aus einer 1,3-Dioxolan-2-on-Verbindung oder mehreren 1,3-Dioxolan-2-on-Verbindungen oder einem γ-Lacton oder mehreren γ-Lactonen oder Mischungen aus mindestens zwei der genannten Verbindungen.

3. LiBOB nach Anspruch 1 oder 2, **dadurch gekennzeichnet, dass** die 1,3-Dioxolan-2-on-Verbindung aus Ethylencarbonat (EC, 1,3-Dioxolan-2-on), Propylencarbonat (PC, 4-Methyl-1,3-Dioxolan-2-on) oder Butylencarbonat (BC, 4-Ethyl-1,3-Dioxolan-2-on) ausgewählt ist.

4. LiBOB nach Anspruch 1 oder 2, **dadurch gekennzeichnet, dass** das γ-Lacton aus γ-Butyrolacton oder γ-Valerolacton ausgewählt ist.

5. LiBOB nach einem oder mehreren der Ansprüche 1 bis 4, **dadurch gekennzeichnet, dass** der Median des größten Durchmessers der Primärkristallite 200 µm bis 2 mm, besonders bevorzugt 500 µm bis 1 mm beträgt.

6. LiBOB nach einem oder mehreren der Ansprüche 1 bis 5, **dadurch gekennzeichnet, dass** weniger als 20 Gew.-% des LiBOB unterhalb der halben Länge des Median des größten Durchmessers der Primärkristallite liegen.

7. LiBOB nach einem oder mehreren der Ansprüche 1 bis 6, **dadurch gekennzeichnet, dass** das Volumen der Primärkristallite zwischen 0,01 bis 100 mm³, bevorzugt zwischen 0,1 bis 50 mm³ beträgt.

8. LiBOB nach einem oder mehreren der Ansprüche 1 bis 7, **dadurch gekennzeichnet, dass** der Staubanteil des LiBOB unter 5 Gew.-%, besonders bevorzugt unter 2 Gew.-% liegt.

9. LiBOB nach einem oder mehreren der Ansprüche 1 bis 8, **dadurch gekennzeichnet, dass** die Trübung einer 15 %igen Lösung des LiBOB in Acetonitril maximal 50 NTU beträgt.

10. LiBOB nach einem oder mehreren der Ansprüche 1 bis 9, **dadurch gekennzeichnet, dass** es frei von anderen organischen Stoffen als 1,3-Dioxolan-2-on-Verbindungen oder γ-Lactonen ist.

11. LiBOB nach einem oder mehreren der Ansprüche 1 bis 10, **dadurch gekennzeichnet, dass** es frei von Acetonitril ist.

12. Verfahren zur Herstellung eines kristallinen, staubarmen und klarlöslichen LiBOB•( n 5-Ring-Ester)-Komplexes mit einem Restlösemittelanteil von kleiner als 50 Gew.% oder LiBOB, welches solvatfrei vorliegt gemäß einem oder mehreren der Ansprüche 1 bis 11, **dadurch gekennzeichnet, dass** eine LiBOB-Rohlösung durch Auflösen von rohem LiBOB in einem solvatbildenden Lösemittel hergestellt wird, wobei das Lösemittel als wesentlichen Bestandteil mindestens einen zyklischen 5-Ring-Ester enthält oder aus diesen besteht, unlösliche Partikel abgetrennt werden und die daraus resultierende klare LiBOB-Lösung per Eindampfkristallisation soweit eingeengt wird, dass sich festes LiBOB abscheidet und das LiBOB durch einen zweiten fest/flüssig-Trennprozess isoliert wird, wobei n die Werte von 0,001 bis 2 Äquivalente annehmen kann.

13. Verfahren zur Herstellung eines kristallinen, klarlöslichen LiBOB•( n 5-Ring-Ester)-Komplexes durch Verdrängungskristallisation gemäß einem oder mehreren der Ansprüche 1 bis 11, **dadurch gekennzeichnet, dass** eine klare Lösung von LiBOB in einem solvatbildenden Lösemittel, das als wesentlichen Bestandteil mindestens einen zyklischen 5-Ring-Ester enthält oder aus diesen besteht, in Kontakt mit einem in reiner Form das LiBOB nicht lösenden Lösemittel gebracht wird und dass das in Folge dieser Vermischung auskristallisierte LiBOB-Solvat in an sich bekannter Weise isoliert wird, wobei n die Werte von 0,001 bis 2 Äquivalente annehmen kann.

14. Verfahren zur Herstellung eines kristallinen, staubarmen und klarlöslichen LiBOB•( n 5-Ring-Ester)-Komplexes mit einem Restlösemittelanteil von kleiner als 50 Gew.% gemäß einem oder mehreren der Ansprüche 1 bis 11, **dadurch gekennzeichnet, dass** eine LiBOB-Rohlösung durch Auflösen von rohem LiBOB in einem solvatbildenden Lösemittel hergestellt wird, wobei das solvatbildende Lösemittel als wesentlichen Bestandteil mindestens einen zyklischen 5-Ring-Ester enthält oder aus diesen besteht, unlösliche Partikel abgetrennt werden und aus der daraus resultierenden klaren LiBOB-Lösung in einer Verdrängungskristallisation festes LiBOB abgeschieden wird und das LiBOB durch einen zweiten fest/flüssig-Trennprozess isoliert wird, wobei n die Werte von 0,001 bis 2 Äquivalente annehmen kann.

15. Verfahren zur Herstellung eines kristallinen, klarlöslichen LiBOB•( n 5-Ring-Ester)-Komplexes durch Kühlkristallisation gemäß einem oder mehreren der Ansprüche 1 bis 11, **dadurch gekennzeichnet, dass** eine bei einer bestimmten Temperatur gesättigte klare LiBOB-Lösung in einem solvatbildenden Lösemittel, wobei das Lösemittel als wesentlichen Bestandteil mindestens einen zyklischen 5-Ring-Ester enthält oder aus diesen besteht, auf eine niedrigere Temperatur abgekühlt wird, so dass LiBOB in Form eines LiBOB•( n 5-Ring-Ester)-Komplexes auskristallisiert und das Kristallisat in an sich bekannter Weise isoliert wird, wobei n die Werte von 0,001 bis 2 Äquivalente annehmen kann.

16. Verfahren nach einem oder mehreren der Ansprüche 12 bis 15, **dadurch gekennzeichnet, dass** die LiBOB-Rohlösung in dem solvatbildenden Lösemittel mit einer basischen Verbindung und/oder einem wasserentziehenden Feststoff in Kontakt gebracht wird.

17. Verfahren nach einem oder mehreren der Ansprüche 12 bis 16, **dadurch gekennzeichnet, dass** die LiBOB-Rohlösung mit einer basischen Verbindung und/oder einem wasserentziehenden Feststoff gerührt, geschüttelt oder sonst wie homogenisiert wird.

18. Verfahren nach einem oder mehreren der Ansprüche 12 bis 17, **dadurch gekennzeichnet, dass** die Kontaktzeit zwischen LiBOB-Rohlösung und einer basischen Verbindung und/oder einem wasserentziehenden Feststoff zwischen 10 Minuten und 1 Woche bei Temperaturen zwischen 0 °C und 200 °C beträgt.

19. Verfahren nach einem oder mehreren der Ansprüche 12 bis 18, **dadurch gekennzeichnet, dass** die Kontaktzeit bevorzugt 1 bis 10 Stunden bei Temperaturen von bevorzugt 30 bis 200 °C beträgt.

20. Verfahren nach einem oder mehreren der Ansprüche 12 bis 19, **dadurch gekennzeichnet, dass** die basische Verbindung und/oder der wasserentziehende Feststoff ausgewählt ist aus einem oder mehreren der folgenden Stoffe: Alkalimetallhydride, bevorzugt Natriumhydrid und/oder Lithiumhydrid, Metalloxiden, bevorzugt Calciumoxid, Lithiumoxalat, Lithiumhydrogenoxalat, Lithiummetaborat, Lithiumtetraborat, Lithiumcarbonat, wasserfreies Lithiumhydroxid, Molsieben und/oder Aluminiumoxiden.

21. Verfahren nach einem oder mehreren der Ansprüche 12 bis 20, **dadurch gekennzeichnet, dass** die basische Verbindung und/oder der wasserentziehende Stoff in Mengen von 0,01 bis 10 Gew.-% der LiBOB-Lösung zugemischt wird.

## Claims

1. LiBOB, which is a coarsely crystalline free of solvents alien to batteries, wherein a substantially cuboid LiBOB is understood by this in which the median of the largest diameter of the primary crystallites amounts to 50 µm to 5 mm, which forms a low-dust LiBOB crystallite whose dust content is less than 10 wt.% and denoted as dust are particles whose largest diameter is less than 10 µm, and which is completely soluble, wherein the turbidity of a 15% solution of LiBOB in acetonitrile amounts at most to 100 NTU and is present as a LiBOB•(n 5-membered ring ester) complex, wherein n can assume the values from 0.001 to 2 equivalents or is present in a solvate-free form.

2. LiBOB according to claim 1, **characterised in that** the 5-membered ring ester is selected from a 1,3-dioxolan-2-one compound or several 1,3-dioxolan-2-one compounds or from a γ-lactone or several γ-lactones or from mixtures of at least two of the cited compounds.

3. LiBOB according to claim 1 or 2, **characterised in that** the 1,3-dioxolan-2-one compound is selected from ethylene carbonate (EC, 1,3-dioxolan-2-one), propylene carbonate (PC, 4-methyl-1,3-dioxolan-2-one) or butylene carbonate (BC, 4-ethyl-1,3-d-oxolan-2-one).

4. LiBOB according to claim 1 or 2, **characterised in that** the γ-lactone is selected from γ-butyrolactone or γ-valeralactone.

5. LiBOB according to one or more of claims 1 to 4, **characterised in that** the median of the largest diameter of the primary crystallites is 200 µm to 2 mm, particularly preferably 500 µm to 1 mm.

6. LiBOB according to one or more of claims 1 to 5, **characterised in that** less than 20 wt.% of the LiBOB is below half the length of the median of the largest diameter of the primary crystallites.

7. LiBOB according to one or more of claims 1 to 6, **characterised in that** the volume of the primary crystallites is between 0.01 and 100 mm³, preferably between 0.1 and 50 mm³.

8. LiBOB according to one or more of claims 1 to 7, **characterised in that** the dust content of the LiBOB is below 5 wt.%, particularly preferably below 2 wt.%.

9. LiBOB according to one or more of claims 1 to 8, **characterised in that** the turbidity of a 15% solution of the LiBOB in acetonitrile is at most 50 NTU.

10. LiBOB according to one or more of claims 1 to 9, **characterised in that** it is free from organic substances other than 1,3-dioxolan-2-one compounds or γ-lactones.

11. LiBOB according to one or more of claims 1 to 10, **characterised in that** it is free from acetonitrile.

12. Process for producing a crystalline, low-dust and completely soluble LiBOB•(n 5-membered ring ester) complex having a residual solvent content of less than 50 wt.% or LiBOB which is present in a solvate-free form in accordance with one or more of claims 1 to 11, **characterised in that** a crude LiBOB solution is produced by dissolving crude LiBOB in a solvate-forming solvent, wherein the solvent contains at least one cyclic 5-membered ring ester as a substantial constituent or consists thereof, insoluble particles are separated off and the resulting clear LiBOB solution is concentrated to small volume by evaporative crystallisation until solid LiBOB is precipitated, and the LiBOB is isolated by a second solid/liquid separation process, wherein n can assume the values from 0.001 to 2 equivalents.

13. Process for producing a crystalline, completely soluble LiBOB•(n 5-membered ring ester) complex by displacement crystallisation in accordance with one or more of claims 1 to 11, **characterised in that** a clear solution of LiBOB in a solvate-forming solvent containing at least one cyclic 5-membered ring ester as a substantial constituent, or consisting thereof, is brought into contact with a solvent which does not dissolve the LiBOB in its pure form, and the LiBOB solvate crystallised out following this mixing is isolated in a manner known per se, wherein n can assume the values from 0.001 to 2 equivalents.

14. Process for producing a crystalline, low-dust and completely soluble LiBOB•(n 5-membered ring ester) complex having a residual solvent content of less than 50 wt.% in accordance with one or more of claims 1 to 11, **characterised in that** a crude LiBOB solution is produced by dissolving crude LiBOB in a solvate-forming solvent, wherein the solvate-forming solvent contains at least one cyclic 5-membered ring ester as a substantial constituent or consists thereof, insoluble particles are separated off and solid LiBOB is precipitated out of the resulting clear LiBOB solution in a displacement crystallisation, and the LiBOB is isolated by a second solid/liquid separation process, wherein n can assume the values from 0.001 to 2 equivalents.

15. Process for producing a crystalline, completely soluble LiBOB•(n 5-membered ring ester) complex by cooling crystallisation in accordance with one or more of claims 1 to 11, **characterised in that** a clear LiBOB solution in a solvate-forming solvent which is saturated at a certain temperature, the solvent containing at least one cyclic 5-membered ring ester as a substantial constituent or consisting thereof, is cooled to a lower temperature so that LiBOB crystallises out in the form of a LiBOB•(n 5-membered ring ester) complex and the crystallisate is isolated in a manner known per se, wherein n can assume the values from 0.001 to 2 equivalents.

16. Process according to one or more of claims 12 to 15, **characterised in that** the crude LiBOB solution in the solvate-forming solvent is brought into contact with a basic compound and/or a dehydrating solid.

17. Process according to one or more of claims 12 to 16, **characterised in that** the crude LiBOB solution is stirred, shaken or otherwise homogenised with a basic compound and/or a dehydrating solid.

18. Process according to one or more of claims 12 to 17, **characterised in that** the contact time between the crude LiBOB solution and a basic compound and/or a dehydrating solid is between 10 minutes and one week at temperatures of between 0°C and 200°C.

19. Process according to one or more of claims 12 to 18, **characterised in that** the contact time is preferably 1 to 10 hours at temperatures of preferably 30 to 200°C.

20. Process according to one or more of claims 12 to 19, **characterised in that** the basic compound and/or the dehydrating solid is selected from one or more of the following substances: alkali-metal hydrides, preferably sodium hydride and/or lithium hydride, metal oxides, preferably calcium oxide, lithium oxalate, lithium hydrogen oxalate, lithium metaborate, lithium tetraborate, lithium carbonate, anhydrous lithium hydroxide, molecular sieves and/or aluminium oxides.

21. Process according to one or more of claims 12 to 20, **characterised in that** the basic compound and/or the dehydrating substance is added in quantities of 0.01 to 10 wt.% of the LiBOB solution.

## Revendications

1. LiBOB (bis(oxalato)borate de lithium), qui est exempt de solvants inappropriés dans des batteries, qui se présente en gros cristaux, ce par quoi l'on entend un LiBOB en forme, essentiellement, de parallélépipède rectangle et pour lequel la valeur médiane du plus grand diamètre des cristallites primaires est de 50 µm à 5 mm, qui forme un cristallisat de LiBOB pauvre en poussières, dont la fraction de poussières représente moins de 10 % en poids, étant entendu qu'on appelle « poussières » les particules dont le plus grand diamètre vaut moins de 10 µm, qui peut donner des solutions limpides, la turbidité d'une solution à 15 % de LiBOB dans de l'acétonitrile valant au maximum 100 NTU, et qui se présente sous forme de complexe LiBOB•[n (ester cyclique à cinq chaînons)] où n peut prendre une valeur de 0,001 à 2 équivalents, ou bien qui se présente à l'état non solvaté.

2. LiBOB conforme à la revendication 1, **caractérisé en ce que** l'ester cyclique à 5 chaînons est choisi parmi un ou plusieurs composé(s) de type 1,3-dioxolane-2-one, une ou plusieurs γ-lactone(s), et les mélangeas d'au moins deux composés de ces types.

3. LiBOB conforme à la revendication 1 ou 2, **caractérisé en ce que** le composé de type 1,3-dioxolane-2-one est choisi parmi le carbonate d'éthylène (EC, 1,3-dioxolane-2-one), le carbonate de propylène (PC, 4-méthyl-1,3-dioxolane-2-one), et le carbonate de butylène (BC, 4-éthyl-1,3-dioxolane-2-one).

4. LiBOB conforme à la revendication 1 ou 2, **caractérisé en ce que** la γ-lactone est choisie parmi la γ-butyrolactone et la γ-valérolactone.

5. LiBOB conforme à l'une ou plusieurs des revendications 1 à 4, **caractérisé en ce que** la valeur médiane du plus grand diamètre des cristallites primaires est de 200 µm à 2 mm, et en particulier, de 500 µm à 1 mm.

6. LiBOB. conforme à l'une ou plusieurs des revendications 1 à 5, **caractérisé en ce qu'**il y a moins de 20 % en poids du LiBOB qui se situe au-dessous de la moitié de la valeur médiane du plus grand diamètre des cristallites primaires.

7. LiBOB conforme à l'une ou plusieurs des revendications 1 à 6, **caractérisé en ce que** le volume des cristallites primaires vaut de 0,01 à 100 mm³, et en particulier, de 0,1 à 50 mm³.

8. LiBOB conforme à l'une ou plusieurs des revendications 1 à 7, **caractérisé en ce que** la fraction de poussières du LiBOB en représente moins de 5 % en poids, et en particulier, moins de 2 % en poids.

9. LiBOB conforme à l'une ou plusieurs des revendications 1 à 8, **caractérisé en ce que** la turbidité d'une solution à 15 % de LiBOB dans de l' acétonitrile vaut au maximum 50 NTU.

10. LiBOB conforme à l'une ou plusieurs des revendications 1 à 9, **caractérisé en ce qu'**il ne contient pas d'autres substances organiques que des composés de type 1,3-dioxolane-2-one ou des γ-lactones.

11. LiBOB conforme à l'une ou plusieurs des revendications 1 à 10, **caractérisé en ce qu'**il ne contient pas d'acétonitrile.

12. Procédé de préparation d'un complexe LiBOB• [n (ester cyclique à cinq chaînons)], cristallin, pauvre en poussières, capable de donner des solutions limpides et comprenant moins de 50 % en poids de solvant résiduel, ou d'un LiBOB se présentant sous une forme sans solvant, conforme à l'une ou plusieurs des revendications 1 à 11, **caractérisé en ce qu'**on prépare une solution brute de LiBOB en dissolvant du LiBOB brut dans un solvant solvatant, lequel solvant comporte, en tant que constituant essentiel, au moins un ester cyclique à 5 chaînons ou est constitué d'un tel ester, on sépare les particules insolubles, on concentre la solution limpide de LiBOB qui en résulte, par cristallisation par évaporation, au point que du LiBOB solide s'en sépare, et l'on isole ce LiBOB en opérant une deuxième séparation solide/liquide, étant entendu que n peut prendre une valeur de 0,001 à 2 équivalents.

13. Procédé de préparation, par cristallisation par déplacement, d'un complexe LiBOB• [n (ester cyclique à cinq chaînons)], cristallin et capable de donner des solutions limpides, conforme à l'une ou plusieurs des revendications 1 à 11, **caractérisé en ce qu'**on met une solution limpide de LiBOB dans un solvant solvatant, qui comporte, en tant que constituant essentiel, au moins un ester cyclique à 5 chaînons ou est constitué d'un tel ester, en contact avec un solvant qui, à l'état pur, ne dissout pas le LiBOB, et l'on isole d'une façon connue le solvat de LIBOB recristallisé à la suite de cette opération de mélange, étant entendu que n peut prendre une valeur de 0,001 â 2 équivalents.

14. Procédé de préparation d'un complexe LiBOB•[n (ester cyclique à cinq chaînons)], cristallin, pauvre en poussières, capable de donner des solutions limpides et comprenant moins de 50 % en poids de solvant résiduel, conforme à l'une ou plusieurs des revendications 1 à 11, **caractérisé en ce qu'**on prépare une solution brute de LiBOB en dissolvant du LiBOB brut dans un solvant solvatant, lequel solvant solvatant comporte, en tant que constituant essentiel, au moins un ester cyclique à 5 chaînons ou est constitué d'un tel ester, on sépare les particules insolubles, on sépare de la solution limpide de LiBOB qui en résulte, par cristallisation par déplacement, du LiBOB solide, et l'on isole ce LiBOB en opérant une deuxième séparation solide/liquide, étant entendu que n peut prendre une valeur de 0,001 à 2 équivalents.

15. Procédé de préparation, par cristallisation par refroidissement, d'un complexe LiBOB•[n (ester cyclique à cinq chaînons)], cristallin et capable de donner des solutions limpides, conforme à l'une ou plusieurs des revendications 1 à 11, **caractérisé en ce que** l'on refroidit une solution limpide, saturée, à une certaine température, de LIBOB. dans un solvant solvatant, lequel solvant comporte, en tant que constituant essentiel, au moins un ester cyclique à 5 chaînons ou est constitué d'un tel ester, jusqu'à une température plus basse, de sorte que du Li-BOB recristallise sous forme d'un complexe LiBOB•[n (ester cyclique à cinq chaînons)], et l'on isole d'une façon connue le cristallisat, étant entendu que n peut prendre une valeur de 0,001 à 2 équivalents.

16. Procédé conforme à l'une ou plusieurs des revendication 12 à 15, **caractérisé en ce que** la solution brute de LiBOB dans le solvant solvatant est mise en contact avec un composé basique et/ou un solide déshydratant.

17. Procédé conforme à l'une ou plusieurs des revendications 12 à 16, **caractérisé en ce que** la solution brute de LiBOB dans le solvan solvatant est agitée, secouée ou homogénéisée d'une quelconque manière avec un composé basique et/ou un solide déshydratant.

18. Procédé conforme à l'une ou plusieurs des revendications 12 à 17, **caractérisé en ce que** le temps de contact entre la solution brute de LiBOB et un composé basique et/ou un solide déshydratant vaut de 10 minutes à 1 semaine, à des températures de 0 à 200 °C.

19. Procédé conforme à l'une ou plusieurs des revendications 12 à 18, **caractérisé en ce que** le temps de contact vaut en particulier de 1 à 10 heures, à des températures qui valent en particulier de 30 à 200 °C.

20. Procédé conforme à l'une ou plusieurs des revendications 12 à 19, **caractérisé en ce que** le composé basique et/ou le solide déshydratant est ou sont choisi(s) parmi l'une ou plusieurs des substances suivantes : hydrures de métal alcalin, en particulier hydrure de sodium et/ou hydrure de lithium, oxydes de métal, en particulier oxyde de calcium, oxalate de lithium, hydrogéno-oxalate de lithium, métaborate de lithium, tétraborate de lithium, carbonate de lithium, hydroxyde de lithium anhydre, tamis moléculaires, et/ou oxydes d'aluminium.

21. Procédé conforme à l'une ou plusieurs des revendications 12 à 20, **caractérisé en ce que** le composé basique et/ou le solide déshydratant est ou sont ajouté(s) et mélangé(s) en des quantités représentant de 0,01 à 10 % du poids de la solution de LiBOB.
